(19) Europäisches Patentamt
European Patent Office
Office européen des brevets

(11) EP 4 471 079 A1

(12) **EUROPEAN PATENT APPLICATION**

(43) Date of publication:
04.12.2024 Bulletin 2024/49

(21) Application number: 24178492.5

(22) Date of filing: 28.05.2024

(51) International Patent Classification (IPC):
**C08J 5/04** $^{(2006.01)}$

(52) Cooperative Patent Classification (CPC):
(C-Sets available)
**C08J 5/045; C08J 5/047; C08L 1/02; C08L 23/12;
C08L 97/02;** C08J 2323/12; C08J 2401/02;
C08J 2497/02                                      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 02.06.2023 SE 2330255

(71) Applicant: **Woodcomposite Sweden AB**
**314 32 Hyltebruk (SE)**

(72) Inventors:
• **Stenvall, Erik**
**654 57 Karlstad (SE)**
• **Moberg, Tobias**
**302 32 Halmstad (SE)**
• **Ternström, Carl**
**314 34 Hyltebruk (SE)**

(74) Representative: **Barker Brettell Sweden AB**
**Kungsbroplan 3**
**112 27 Stockholm (SE)**

(54) **CELLULOSIC COMPOSITE**

(57)   A cellulosic composite comprises a thermoplastic polymer matrix and from 5 up to 80 weight-% of cellulose and/or lignocellulose fibers. The cellulose and/or lignocellulose fibers comprise a mixture of elongated cellulose and/or lignocellulose fibers having an average elongation equal to or lower than 0.300 and rounded cellulose and/or lignocellulose fibers having an average elongation equal to or higher than 0.325. A mass fraction of the elongated cellulose and/or lignocellulose fibers in the mixture is equal to or larger than a mass fraction of the rounded cellulose and/or lignocellulose fibers in the mixture. The cellulosic composite is an environmentally friendlier substitute for fossil-based plastics that is adapted for production of articles (30) by injection molding.

Fig. 3

(52) Cooperative Patent Classification (CPC): (Cont.)

C-Sets
**C08L 23/12, C08L 1/02;**
**C08L 23/12, C08L 97/02**

**Description**

TECHNICAL FIELD

The present invention generally relates to cellulosic composites, composite granulates and articles, and methods of producing cellulosic composites and composite articles, and in particular to such cellulosic composites having improved melt processability.

BACKGROUND

With growing awareness for the environment and humanly induced climate change, the use of plastic items and products, and in particular single use plastic items and products, has come more and more into question. However, despite this concern the use of these items and products has grown vastly with new trends in lifestyles and consumer habits of the last decade. There is therefore a need to provide costeffective replacement to the plastic items and products. Examples of such replacements would be to use composite materials that are derived from renewable feedstock. Cellulosic composites based on chemically processed pulp have been under development a long time and recently commercialized. Chemically processed pulp is cellulosic material produced using chemical pulping processes, such as kraft or sulfite processes, that involve chemical treatment and high temperatures. These chemical pulping processes remove much of the hemicelluloses and lignin from the pulp, so the resulting chemical pulp contains little or no residual lignin.

However, the cellulose fibers in the cellulosic composite may cause problems during processing of the cellulosic composite, in particular for elongated cellulose fibers. For instance, there is a desire to at least partially replace fossil-based plastics in injection molding applications of various articles, such as caps, jars, lids, cutlery and housings. However, injection molding cellulosic composites with such cellulose fibers requires high injection molding pressures and generates a lot of heat during the injection molding process due to the high viscosity of the cellulosic composites. The heat may then thermally degrade the cellulosic composite. Hence, both the high pressure and thermal degradation are today limiting factors to the use of cellulosic composites with cellulose fibers in many applications.

WO 2022/084059 discloses a composite material comprising at least one matrix polymer and a mass fraction of at most 80 % of a mixture of cellulose short fibers having a fiber length of less than 500 $\mu$m and cellulose long fibers having a fiber length of more than 1 mm. The cellulose short fibers constitute at least 50 % of the mixture of cellulose short fibers and cellulose long fibers.

There is therefore a need for cellulosic composites comprising cellulose fibers that are processable at reduced processing pressure and/or reduced risk for thermal degradation.

SUMMARY

It is a general objective to provide cellulosic composites with cellulose fibers that are processable at reduced processing pressure and/or reduced risk for thermal degradation.

This and other objectives are met by the embodiments of the present invention.

The present invention is defined in the independent claims. Further embodiments of the invention are defined in the dependent claims.

An aspect of the invention relates to a cellulosic composite comprising a thermoplastic polymer matrix and from 5 up to 80 weight-% of cellulose and/or lignocellulose fibers comprising a mixture of elongated cellulose and/or lignocellulose fibers having an average elongation equal to or lower than 0.300 and rounded cellulose and/or lignocellulose fibers having an average elongation equal to or higher than 0.325. A mass fraction of the elongated cellulose and/or lignocellulose fibers in the mixture is equal to or larger than a mass fraction of the rounded cellulose and/or lignocellulose fibers in the mixture.

Another aspect of the invention relates to a composite granulate made of a cellulosic composite according to the above.

A further aspect of the invention relates to a method of producing a composite article. The method comprises injection molding composite granulates of the invention to produce a composite article.

Yet another aspect of the invention relates to a method of producing a cellulosic composite comprising cellulose and/or lignocellulose fibers and a thermoplastic polymer matrix. The method comprises melt processing a mixture comprising at least one thermoplastic polymer and from 5 up to 80 weight-% of cellulose and/or lignocellulose fibers comprising a mixture of elongated cellulose and/or lignocellulose fibers having an average elongation equal to or lower than 0.300 and rounded cellulose and/or lignocellulose fibers having an average elongation equal to or higher than 0.325. A mass fraction of the elongated cellulose and/or lignocellulose fibers in the mixture is equal to or larger than a mass fraction of the rounded cellulose and/or lignocellulose fibers in the mixture.

Yet another aspect of the invention relates to use of rounded cellulose and/or lignocellulose fibers having an average elongation equal to or higher than 0.325 as an additive to a cellulosic composite comprising a thermoplastic polymer matrix and elongated cellulose and/or lignocellulose fibers having an average elongation equal to or lower than 0.300 to improve melt processability of the cellulosic composite.

The cellulosic composite of the invention can be used as an environmentally friendlier alternative to fossil-based plastics in injection molding applications for the production of various articles. The cellulose and/or lignocellulose fibers in the cellulosic composite are tailored to obtain desired mechanical properties of the cellulosic composite and articles produced therefrom while improving the processability of the cellulosic composite during injection molding to lower injection molding pressure and reduce the risk of thermal degradation of the cellulosic composite during injection molding.

BRIEF DESCRIPTION OF THE DRAWINGS

The embodiments, together with further objects and advantages thereof, may best be understood by making reference to the following description taken together with the accompanying drawings, in which:

Fig. 1 is a schematic illustration of a cellulose and/or lignocellulose fiber;

Fig. 2 is a schematic illustration of a compounding machine; and

Fig. 3 is a schematic illustration of an injection molding machine.

DETAILED DESCRIPTION

The present invention generally relates to cellulosic composites, composite granulates and articles, and methods of producing cellulosic composites and composite articles, and in particular to such cellulosic composites having improved melt processability.

There is a large demand for biocomposites, such as cellulosic composites, to at least partly replace fossil-based plastics in injection molding applications of various articles, such as caps, jars, lids, cutlery and housings. The cellulosic composites and the articles produced therefrom should have desired mechanical properties in terms of, for instance, tensile and flexural properties, such as tensile strength and modulus and flexural strength and elongation. This is typically achieved by including elongated cellulose fibers in the cellulosic composite. However, injection molding cellulosic composites with a certain amount of such elongated cellulose fibers requires high injection molding pressures and generates a lot of heat during the injection molding process due to the high viscosity of cellulosic composites comprising such elongated cellulose fibers. The generated heat may then thermally degrade the cellulosic composite and in particular the cellulose fibers included therein.

The invention is based on using a mixture of different forms of cellulose and/or lignocellulose fibers in the cellulosic composite. In more detail, less elongated, i.e., rounded, cellulose and/or lignocellulose fibers are included as an additive together with elongated cellulose and/or lignocellulose fibers in the cellulosic composite to improve the processability of the cellulosic composite during injection molding, such as represented by an increase in melt flow volume rate (MVR). This was possible while still maintaining, or even improving, the mechanical properties of the cellulosic composite.

An aspect of the invention relates to a cellulosic composite comprising a thermoplastic polymer matrix and from 5 up to 80 weight-% (wt-%) of cellulose and/or lignocellulose fibers. These cellulose and/or lignocellulose fibers comprise a mixture of elongated cellulose and/or lignocellulose fibers having an average elongation equal to or lower than 0.300 and rounded cellulose and/or lignocellulose fibers having an average elongation equal to or higher than 0.325. A mass fraction of the elongated cellulose and/or lignocellulose fibers in the mixture is equal to or larger than a mass fraction of the rounded cellulose and/or lignocellulose fibers in the mixture.

The cellulosic composite of the invention thereby comprises a thermoplastic polymer matrix made of one or multiple, i.e., at least two, different thermoplastic polymers. This matrix formed by the thermoplastic polymer(s) in turn comprises cellulose and/or lignocellulose fibers as an environmentally friendly replacement of part of the thermoplastic polymer material in the cellulosic composite. As a consequence, the cellulosic composite comprises less fossil-based plastics as compared to a material solely consisting of the thermoplastic polymer material, i.e., without any cellulose and/or lignocellulose fibers.

The cellulose and/or lignocellulose fibers included in the cellulosic composite are preferably intermixed and thereby contained within the thermoplastic polymer matrix. In such a case, the matrix is a mixture of thermoplastic polymer(s) and the cellulose and/or lignocellulose fibers.

According to the invention, the cellulose and/or lignocellulose fibers comprises a mixture of elongated cellulose and/or lignocellulose fibers and rounded cellulose and/or lignocellulose fibers. The elongated cellulose and/or lignocellulose fibers preferably constitute the main component of the cellulose and/or lignocellulose fibers and with the rounded cellulose and/or lignocellulose fibers as an additive. Hence, a mass fraction of the elongated cellulose and/or lignocellulose fibers in the mixture is preferably larger than a mass fraction of the rounded cellulose and/or lignocellulose fibers in the mixture.

The elongated cellulose and/or lignocellulose fibers provide desired mechanical properties in terms of, for instance, tensile and flexural properties, such as tensile strength and modulus and flexural strength and elongation, to the cellulosic composite. However, these elongated cellulose and/or lignocellulose fibers require high injection molding pressures and generate heat when producing articles from the cellulosic composite by injection molding due to the comparatively high viscosity of the cellulosic composite comprising such elongated cellulose fibers. As a consequence, less elongated, i.e., rounded, cellulose and/or lignocellulose fibers are included as an additive to the elongated cellulose and/or lignocellulose fibers in the cellulosic composite to improve the processability of the cellulosic composite during injection molding, i.e., reducing the injection molding pressure and reducing the amount of heat producing during injection molding. As shown in the example section, this improvement in processability was possible without any significant decrease in mechanical properties of the cellulosic composite.

Elongation of cellulose and/or lignocellulose fibers is preferably as defined in International Standard ISO 9276-6: 2008, Representation of results of particle size analysis, Part 6: Descriptive and quantitative representation of particle shape and morphology.

Hence, according to the invention, elongation E of a cellulose and/or lignocellulose fiber is defined as:

$$E = x_E / x_{LG} \qquad\qquad [1]$$

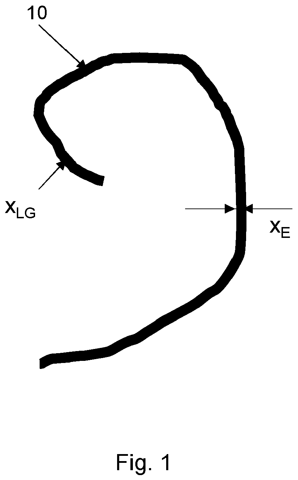

In equation [1], $x_E$ represents average thickness of a cellulose and/or lignocellulose fiber and $x_{LG}$ represents geodesic length of the cellulose and/or lignocellulose fiber. Fig. 1 illustrates a cellulose and/or lignocellulose fiber 10 and indicates the geodesic length $x_{LG}$ of the cellulose and/or lignocellulose fiber 10 and the average thickness $x_E$ of the cellulose and/or lignocellulose fiber 10.

These parameters $x_{LG}$, $x_\varepsilon$ can be determined according to techniques well known in the art, for instance, as described in International standard ISO 13322-2:2021 Particle size analysis - Image analysis methods, Part 2: Dynamic image analysis methods; Pons et al., Particle morphology: from visualization to measurement, Powder Technology (1999) 103: 44-57; Schmid et al., Characterizing Flock Fibres using Quantitative Image Analysis, Flock (2004) 30: 6-12.

With this definition of elongation, an elongated cellulose and/or lignocellulose fiber has a lower elongation as compared to a rounded cellulose and/or lignocellulose fiber. This means that the elongated cellulose and/or lignocellulose fibers have a lower average elongation as compared to the rounded cellulose and/or lignocellulose fibers. There is, though, generally a distribution of elongations around the average elongation for the cellulose and/or lignocellulose fibers. As a consequence, individual elongated or rounded cellulose and/or lignocellulose fibers may have an elongation different from the average elongation of the elongated or rounded cellulose and/or lignocellulose fibers. However, the average elongation for the elongated cellulose and/or lignocellulose fibers in the cellulosic composite is equal to or lower than 0.300 and the average elongation for the rounded cellulose and/or lignocellulose fibers is equal to or higher than 0.325.

"Elongated" and "rounded" as used herein for the two different forms or fractions of cellulose and/or lignocellulose fibers in the cellulosic composite are used to indicate that the two forms or fractions of cellulose and/or lignocellulose fibers have different elongations as defined in equation [1]. This means that the elongated cellulose and/or lignocellulose fibers have a lower average value of the quotient in equation [1] as compared to the rounded cellulose and/or lignocellulose fibers. The elongated cellulose and/or lignocellulose fibers are also referred to herein as first form or fraction or main form or fraction of cellulose and/or lignocellulose fibers having an average elongation equal to or lower than 0.300 and the rounded cellulose and/or lignocellulose fibers are referred to as second form or fraction or auxiliary form or fraction of cellulose and/or lignocellulose fibers having an average elongation equal to or higher than 0.325.

In a preferred embodiment, when determining the average elongation of cellulose and/or lignocellulose fibers, the elongation is determined only for cellulose and/or lignocellulose fibers having a geodesic length above a minimum length, preferably 50 $\mu$m. In such an approach, very small cellulose and/or lignocellulose particles, sometimes referred to as fines, dust, etc. are excluded from the elongation determination of the cellulose and/or lignocellulose fibers.

In an embodiment, average elongation as used herein for the cellulose and/or lignocellulose fibers could be defined as:

$$\frac{1}{N} \sum E_i \qquad\qquad [2]$$

or as

$$\frac{\sum E_i A_i}{\sum A_i} \qquad [3]$$

or as

$$\frac{\sum E_i V_i}{\sum V_i} \qquad [4]$$

In equation [2], [3] and [4], the parameter $N$ represents the number of cellulose and/or lignocellulose fibers, $E_i$ represents the elongation of a cellulose and/or lignocellulose fiber number $i$, whereas $A_i$ and $V_i$ represent the area and the volume of the cellulose and/or lignocellulose fiber number $i$, respectively. Equation [2] represents the number average of the elongation, equation [3] represents the area-weighted average elongation, and equation [4] represents the volume-weighted average elongation. In a preferred embodiment, the average value of the elongation for the cellulose and/or lignocellulose fibers is an areabased average value as defined in equation [3].

The cellulose and/or lignocellulose fibers in the cellulosic composite are typically not uniform but often display a distribution of characteristics and parameters, including elongation. This distribution in, for instance, elongation around the average elongation can be fitted with various mathematical distributions, such as Gaussian distribution, Cauchy distribution, etc. When mixing elongated cellulose and/or lignocellulose fibers and rounded cellulose and/or lignocellulose fibers, the distributions in elongation might be at least partly overlapping for the two forms of cellulose and/or lignocellulose fibers. However, the different forms of cellulose and/or lignocellulose fibers included in the cellulosic composite can still be distinguished by finding the different distributions, which for Gaussian distributions, have peak positions corresponding to the respective average elongations.

In an embodiment, the cellulosic composite comprises the thermoplastic polymer matrix and from 5 up to 80 weight-% of cellulose and/or lignocellulose fibers. In this embodiment, the cellulose and/or lignocellulose fibers consists of a mixture of elongated cellulose and/or lignocellulose fibers having an average elongation equal to or lower than 0.300 and rounded cellulose and/or lignocellulose fibers having an average elongation equal to or higher than 0.325. A mass fraction of the elongated cellulose and/or lignocellulose fibers in the mixture is equal to or larger than a mass fraction of the rounded cellulose and/or lignocellulose fibers in the mixture.

In an embodiment, the elongated cellulose and/or lignocellulose fibers have an average elongation equal to or lower than 0.290. In a preferred embodiment, the elongated cellulose and/or lignocellulose fibers have an average elongation equal to or lower than 0.280, such as equal to or lower than 0.275, or even lower, such as equal to or lower than 0.260.

In a particular embodiment, the elongated cellulose and/or lignocellulose fibers have an average elongation equal to or higher than 0.010, preferably equal to or higher than 0.025, and more preferably equal to or higher than 0.050. Hence, in a particular embodiment, the elongated cellulose and/or lignocellulose fibers have an average elongation selected within an interval of from 0.010 up to 0.300, preferably selected within an interval of from 0.025 up to 0.290, and more preferably selected within an interval of from 0.050 up to 0.280. In a preferred embodiment, the elongated cellulose and/or lignocellulose fibers have an average elongation selected within an interval of from 0.075 up to 0.275, preferably selected within an interval of from 0.100 up to 0.275, more preferably selected within an interval of from 0.125 up to 0.275, such as selected within an interval of from 0.150 up to 0.275, and most preferably selected within an interval of from 0.175 up to 0.275, or selected within an interval of from 0.200 up to 0.275.

In an embodiment, the rounded cellulose and/or lignocellulose fibers have an average elongation equal to or higher than 0.350. In a preferred embodiment, the rounded cellulose and/or lignocellulose fibers have an average elongation equal to or higher than 0.375, such as equal to or higher than 0.400 or equal to or higher than 0.410.

In a particular embodiment, the rounded cellulose and/or lignocellulose fibers have an average elongation equal to or below 0.800, preferably equal to or below 0.750, and more preferably equal to or below 0.700. Hence, in a particular embodiment, the rounded cellulose and/or lignocellulose fibers have an average elongation selected within an interval of from 0.325 up to 0.800, preferably selected within an interval of from 0.350 up to 0.750, and more preferably selected within an interval of from 0.375 up to 0.700. In a preferred embodiment, the rounded cellulose and/or lignocellulose fibers have an average elongation selected within an interval of from 0.375 up to 0.650, preferably selected within an interval of from 0.375 up to 0.600, such as selected within an interval of from 0.375 up to 0.550, and more preferably selected within an interval of from 0.375 up to 0.500, such as selected within an interval of from 0.375 up to 0.450.

In the above-described embodiment, elongation of the elongated and rounded cellulose and/or lignocellulose fibers have been presented as average elongation. Alternatively, the elongation of the cellulose and/or lignocellulose fibers could be presented as median elongation. As an example, the elongated cellulose and/or lignocellulose fibers used in the Example section had an average elongation of 0.260 and a median elongation of 0.152. Correspondingly, the rounded cellulose and/or lignocellulose fibers used in the Example section had an average elongation of 0.410 and a median elongation of 0.361.

The cellulosic composite comprises from 5 up to 80 wt% of the cellulose and/or lignocellulose fibers. Wt% as used herein is an abbreviation for weight percent, i.e., percentage of total weight.

Reference to a range or interval of values herein, such as from X up to Y, includes the full range of values from X to Y including the end values of the range, i.e., X and Y.

In an embodiment, the cellulosic composite comprises from 10 up to 80 wt% of the cellulose and/or lignocellulose fibers. In a preferred embodiment, the cellulosic composite comprises from 10 up to 70 wt% cellulose and/or lignocellulose fibers, preferably from 20 up to 60 wt% cellulose and/or lignocellulose fibers, and more preferably from 30 up to 50 wt% cellulose and/or lignocellulose fibers.

Generally, the higher the content of the cellulose and/or lignocellulose fibers in the cellulosic composite the less the content of fossil-based plastics, i.e., the thermoplastic polymer matrix, and thereby the cellulosic composite becomes more environmentally friendly. However, if the cellulosic composite comprises a too high content of the cellulose and/or lignocellulose fibers, i.e., above 80 wt%, then the cellulosic composite may have a tendency to decompose or fall apart. Furthermore, it is generally hard to successfully produce cellulosic articles by injection molding from a cellulosic composite comprising more than 80 wt% cellulose and/or lignocellulose fibers. Hence, in a preferred embodiment, the cellulose and/or lignocellulose fibers constitute from 5 up to 80 wt% of the weight percentage of the cellulosic composite.

The cellulose and/or lignocellulose fibers preferably comprise the elongated cellulose and/or lignocellulose fibers as a main fiber constituent and the rounded cellulose and/or lignocellulose fibers as an additive. Hence, in an embodiment, the mass fraction of the elongated cellulose and/or lignocellulose fibers in the mixture, and thereby also in the cellulosic composite, is higher than the mass fraction of the rounded cellulose and/or lignocellulose fibers.

In an embodiment, the mass fraction of the elongated cellulose and/or lignocellulose fibers is selected within an interval of from 55 up to 95 % of the mixture of cellulose and/or lignocellulose fibers. In a preferred embodiment, the mass fraction of the elongated cellulose and/or lignocellulose fibers is selected within an interval of from 60 up to 90 % of the mixture, preferably within an interval of from 70 up to 90 % of the mixture, and more preferably within an interval of from 75 up to 87.5 % of the mixture.

Correspondingly, in an embodiment, the mass fraction of the rounded cellulose and/or lignocellulose fibers is selected within an interval of from 5 up to 45 % of the mixture. In a preferred embodiment, the mass fraction of the rounded cellulose and/or lignocellulose fibers is selected within an interval of from 10 up to 40 % of the mixture, preferably within an interval of from 10 up to 30 % of the mixture, and more preferably within an interval of from 12.5 up to 25 % of the mixture.

The cellulose and/or lignocellulose fibers could be in the form of cellulose fibers, lignocellulose fibers or a mixture of cellulose fibers and lignocellulose fibers. Lignocellulose as used herein represent a mixture of cellulose, hemicellulose and lignin.

In an embodiment, the cellulose and/or lignocellulose fibers are milled cellulose and/or lignocellulose fibers, such as milled wood fibers or milled pulp fibers.

In an embodiment, the cellulose and/or lignocellulose fibers are selected from the group consisting of chemical pulp fibers, thermomechanical pulp fibers and mechanical pulp fibers. In a preferred embodiment, the cellulose and/or lignocellulose fibers are chemical pulp fibers.

In a particular embodiment, the cellulose and/or lignocellulose fibers are selected from the group consisting of sulfate pulp fibers, sulfite pulp fibers, dissolving pulp fibers, thermomechanical pulp (TMP) fibers, high temperature thermomechanical pulp (HTMP) fibers, mechanical fibers intended for medium density fiberboard (MDF-fibers), chemi-thermomechanical pulp (CTMP) fibers, high temperature chemi-thermomechanical pulp (HTCTMP) fibers, and a combination thereof.

The cellulose and/or lignocellulose fibers may be bleached or unbleached.

The cellulose and/or lignocellulose fibers can also be produced by other pulping methods and/or from other cellulosic or lignocellulosic raw materials, such as flax, jute, hemp, kenaf, bagasse, cotton, bamboo, straw, or rice husk. It is also possible to use cellulose and/or lignocellulose fibers that are a mixture of fibers from different raw materials, such as a mixture of wood and any of the materials mentioned above. Also synthetic cellulose and/or lignocellulose fibers could be used.

In an embodiment, the cellulose and/or lignocellulose fibers have an average geodesic length below 1 mm, preferably equal to or below 750 $\mu$m. In a particular embodiment, the cellulose and/or lignocellulose fibers have an average geodesic length above 50 $\mu$m but below 1 mm, such as above 50 $\mu$m but equal to or below 750 $\mu$m. In this embodiment, both the elongated cellulose and/or lignocellulose fibers and the rounded cellulose and/or lignocellulose fibers have an average geodesic length below 1 mm, preferably equal to or below 750 $\mu$m, such as above 50 $\mu$m but below 1 mm, preferably above 50 $\mu$m but below 750 $\mu$m.

Cellulosic composites comprising cellulose and/or lignocellulose fibers having an average geodesic length above 1 mm are generally harder to process and produce as the long cellulose and/or lignocellulose fibers may become entangled causing an increase in viscosity during injection molding.

In an embodiment, the thermoplastic polymer matrix comprises at least one thermoplastic polymer.

In a preferred embodiment, the at least one thermoplastic polymer is selected from the group consisting of polyethylene (PE), polypropylene (PP), polyolefin copolymers, polystyrene (PS), polystyrene copolymers, polyacrylates, polymethacrylates, polyesters, polyvinylchloride (PVC), fluoropolymers, polyamides (PA), polyether imides, polyphenylene sulfides, polysulfones, polylactic acid (PLA), polyacetals, polycarbonates, polyphenylene oxides, polyurethanes, polyacrylates, polyhydroxyalkanoates (PHA), polybutyrate adipate terephthalate (PBAT), polybutylene succinate (PBS), polycaprolactones (PCL), polyglycolic acid (PGA), polyethylene terephthalate (PET), acrylonitrile butadiene styrene (ABS), polycarbonate (PC), poly(methyl methacrylate) (PMMA), polyoxymethylene (POM), poly(p-phenylene oxide) (PPO), a copolymer thereof and a mixture thereof.

In a preferred embodiment, the at least one thermoplastic polymer is selected from the group consisting of PE, PP, a copolymer thereof and a mixture thereof. In a currently preferred embodiment, the at least one thermoplastic polymer is PP or a copolymer thereof.

As mentioned in the foregoing, the thermoplastic polymer matrix could comprise a single thermoplastic polymer, preferably selected among the above-presented thermoplastic polymers. In another embodiment, the thermoplastic polymer matrix comprises a mixture or copolymer of multiple thermoplastic polymers, preferably selected among the above-presented thermoplastic polymers.

In an embodiment, the cellulosic composite comprises at least 20 weight-% and up to 95 weight-% of the at least one thermoplastic polymer. In a preferred embodiment, the cellulosic composite comprises at least 20 weight-% and up to 90 weight-% of the at least one thermoplastic polymer, preferably at least 30 weight-% and up to 90 weight-% of the at least one thermoplastic polymer, and more preferably at least 40 weight-% and up to 80 weight-% of the at least one thermoplastic polymer, such as at least 50 weight% and up to 70 weight-% of the at least one thermoplastic polymer.

The cellulosic composite comprises the thermoplastic polymer matrix and the cellulose and/or lignocellulose fibers. In an embodiment, the cellulosic composite may also comprise at least one coupling agent. Such coupling agents can be used to promote chemically bonding between the thermoplastic polymer matrix, or the thermoplastic polymers forming the thermoplastic polymer matrix, and the cellulose and/or lignocellulose fibers.

In an embodiment, the at least one coupling agent is selected from the group consisting of maleic anhydride, including maleic anhydride grafted polymers, a silane, a siloxane, and a mixture thereof. In a preferred embodiment, the at least one coupling agent is maleic anhydride, including maleic anhydride grafted polymers. For instance, if the cellulosic composite comprises PP as thermoplastic polymer then the coupling agent could be a maleic anhydride modified copopolypropylene.

The cellulosic composite could comprise a single coupling agent or a mixture of two or more coupling agents.

In an embodiment, the cellulosic composite comprises at least 0.5 weight-% and up to 5 weight-% of the at least one coupling agent. In a preferred embodiment, the cellulosic composite comprises at least 1 weight-% and up to 5 weight-% of the at least one coupling agent, and preferably at least 1.5 weight-% and up to 3 weight-% of the at least one coupling agent.

The cellulosic composite may optionally comprise one or more additives, such as selected from the group consisting of a lubricant, a colorant, a pigment, a filler, an acid scavenger, an antioxidant, a light stabilizer, a blowing agent, a UV-stabilizer, a flame retardant, a heat stabilizer, an antistatic agent, and a foaming additive. The at least one additive could thereby be selected among additives traditionally used in cellulosic composites or in thermoplastic materials, for instance, to achieve a visual effect or a desired property to the cellulosic composite.

The cellulosic composite of the invention could be used as a composite masterbatch, from which various composite articles could be produced. In such a case, the cellulosic composite could be in the form of composite granulates made of the cellulosic composite of the invention. Such composite granulates could then be used as a starting material in the production of the composite articles, such as by injection molding.

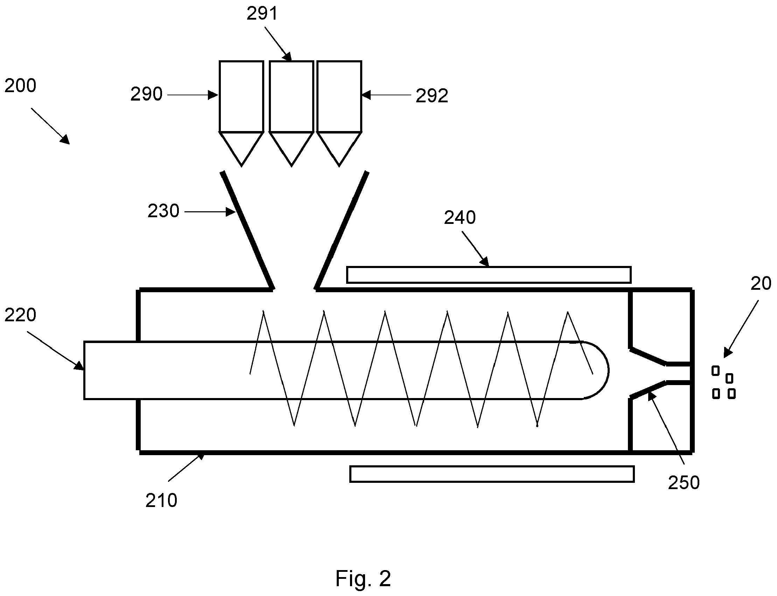

Fig. 2 schematically illustrates an example of a compounding machine 200 that can be used to produce composite granulates 20, also referred to as composite pellets herein, based on the cellulosic composite. Generally, the compounding machine 200 comprise a barrel 210, in which an injection ram or rotating screw 220 is arranged. The interior of the barrel 210 is in connection with a hopper 230, into which a feeding system 290, 291, 292 feeds the thermoplastic polymer(s), the elongated cellulose and/or lignocellulose fibers and the rounded cellulose and/or lignocellulose fibers. In the figure, the feeding system 290, 291, 292 has been represented by a feed unit 290 for the thermoplastic polymer(s), a feed unit 291 for the elongated cellulose and/or lignocellulose fibers and a feed unit 292 for the rounded cellulose and/or lignocellulose fibers. In alternative embodiments, a single feed unit could feed a mixture of the thermoplastic polymer(s), the elongated cellulose and/or lignocellulose fibers and the rounded cellulose and/or lignocellulose fibers or a feed unit feeds the thermoplastic polymer(s) and another feed unit feeds the elongated cellulose and/or lignocellulose fibers and the rounded cellulose and/or lignocellulose fibers into the hopper 230.

At least a portion of the barrel 210 downstream of the hopper 230 may be heated to at least partly melt the thermoplastic polymer(s). In such a case, one or multiple heating elements 240 may be arranged, preferably circumferentially arranged, in connection with at least a portion of the barrel 210. The barrel 210 also comprises a nozzle 250 through which the compounded polymer and fiber material is pushed by the injection ram or rotating screw 220. The extrudate from the nozzle 250 is then cut into segments to form the composite granulates or pellets 20.

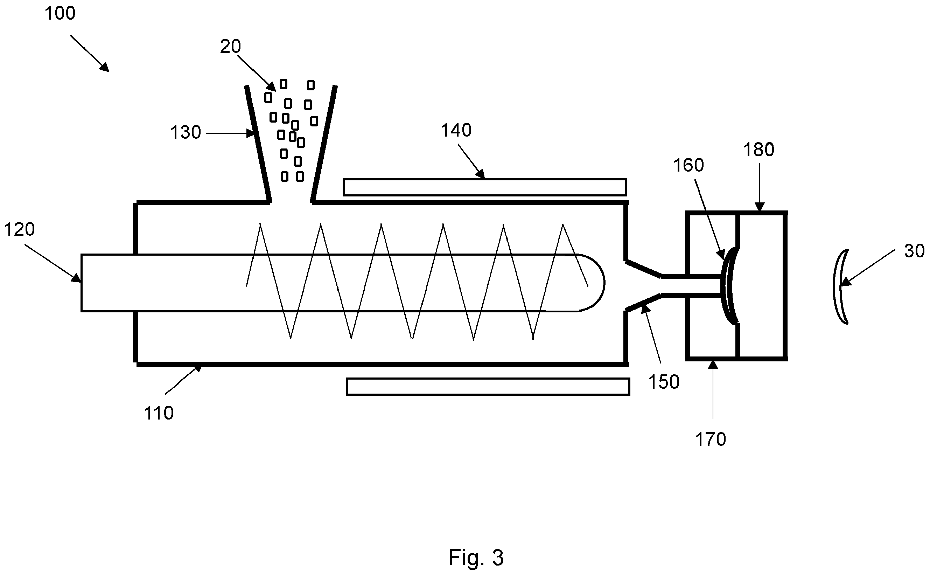

Fig. 3 schematically illustrates an injection molding machine 100 that could be used to produce a cellulosic article 30 based on the composite granules 20 according to the invention. Generally, the injection molding machine 100 comprises a barrel 110, in which an injection ram or rotating screw 120 is arranged. The interior of the barrel 110 is in connection with a hopper 130, into which the composite granules 20 are added. At least a portion of the barrel 110 downstream of the hopper 130 may be heated to at least partly melt the thermoplastic polymer matrix of the cellulosic composite. In such a case, one or multiple heating elements 140 may be arranged, preferably circumferentially arranged, in connection with at least a portion of the barrel 110. The barrel 110 also comprises a nozzle 150 through which the injection molded cellulosic composite is pushed by the injection ram or rotating screw 120. The nozzle 150 is connected with a mold cavity 160 defined by matching molds 170, 180. The injection molded cellulosic composite is pushed through the nozzle 150 and into the mold cavity 160. At least one of the matching molds 170, 180 is movable to provide access to the mold cavity 160 and the cellulosic article 30 formed therein.

In operation, the composite granules 20 are poured into the hopper 130. After that composite granules 20 go down under the action of gravity into the barrel 110. The circumferential heater 140, which is located on the barrel 110, is used to melt the cellulosic composite. The injection ram or rotating screw 120 pushes the cellulosic composite forward into the mold 170, 180 by applying some pressure. Molten cellulosic composite material is injected into the mold cavity 160 defined by the molds 170, 180. After the whole injection molding process is done the manufactured composite article 30 is cooled sufficiently and then mold 180 is opened to allow removal of the composite article 30.

The disclosure also relates to a composite article 30 obtainable by injection molding composite granulates 20 according to the invention. The composite article 30 could be any article that can be manufactured by injection molding using cellulosic composites. Illustrative, but non-limiting, examples of such articles include caps, jars, lids, cutlery and housings.

The present invention also relates to a method of producing a composite article 30. The method comprises injection molding composite granulates 20 according to the invention to produce the composite article 30.

The settings of the injection molding machine used to produce the composite article 30 can be selected based on the particular type of thermoplastic polymer matrix, the types and content of the cellulose and/or lignocellulose fibers in the cellulosic composite, etc. As an illustrative, but non-limiting, example the injection pressure is typically selected within an interval of from 10 up to 300 MPa, preferably from 30 up to 200 MPa, and more preferably from 40 up to 150 MPa, and the molding temperature is typically selected to be below the degradation temperature of the cellulose and/or lignocellulose fibers, i.e., typically below 240°C, preferably below 210°, and more preferably below 190°C.

An aspect of the invention relates to a method of producing a cellulosic composite comprising cellulose and/or lignocellulose fibers and a thermoplastic polymer matrix. The method comprises melt processing a mixture comprising at least one thermoplastic polymer and from 5 up to 80 wt% of cellulose and/or lignocellulose fibers comprising a mixture of elongated cellulose and/or lignocellulose fibers having an average elongation equal to or lower than 0.300 and rounded cellulose and/or lignocellulose fibers having an average elongation equal to or higher than 0.325. A mass fraction of the elongated cellulose and/or lignocellulose fibers in the mixture is equal to or larger than a mass fraction of the rounded cellulose and/or lignocellulose fibers in the mixture.

In an embodiment, the at least one thermoplastic polymer and the cellulose and/or lignocellulose fibers could be mixed together and then exposed to heat to melt the at least one thermoplastic polymer and form the cellulosic composite. In this embodiment, the mixture of the at least one thermoplastic polymer and the cellulose and/or lignocellulose fibers is heated to a temperature above the melting point of the thermoplastic polymer or above the highest melting point if more than one type of thermoplastic polymer is used.

In another embodiment, the at least one thermoplastic polymer is melted and the cellulose and/or lignocellulose fibers are added to the melted at least one thermoplastic polymer. In this embodiment, the at least one thermoplastic polymer is heated to a temperature above the melting point of the thermoplastic polymer or above the highest melting point if more than one type of thermoplastic polymer is used. The mixture of elongated and rounded cellulose and/or lignocellulose fibers is then added to the melted thermoplastic polymer(s) and then the mixture is allowed to cool to form the cellulosic composite.

In the above-described embodiments, the cellulose and/or lignocellulose fibers preferably become distributed within the thermoplastic polymer matrix formed by the at least one thermoplastic polymer.

The invention also relates to the use of rounded cellulose and/or lignocellulose fibers having an average elongation equal to or higher than 0.325 as an additive to a cellulosic composite comprising a thermoplastic polymer matrix and elongated cellulose and/or lignocellulose fibers having an average elongation equal to or lower than 0.300 to improve the melt processability of the cellulosic composite.

In an embodiment, improving the melt processability comprises reducing at least one of injection molding pressure and thermal degradation of the cellulosic composite during injection molding.

EXAMPLES

Various cellulosic composites were made using polypropylene and different combinations of cellulose and/or lignocellulose fibers with compositions shown in Table 1.

Table 1 - Composition of cellulosic composites

| Cellulosic composite | Fiber 1 (wt%) | Fiber 2 (wt%) | PP (wt%) | Coupling agent (wt%) |
|---|---|---|---|---|
| Reference composite 1 | 40 | 0 | 58 | 2 |
| Composite 1 | 30 | 10 | 58 | 2 |
| Composite 2 | 20 | 20 | 58 | 2 |
| Reference composite 2 | 10 | 30 | 58 | 2 |
| Reference composite 3 | 0 | 40 | 58 | 2 |
| Fiber 1 - milled, bleached Kraft pulp fibers with an average elongation of 0.259 and an average geodesic length below 1 mm<br>Fiber 2 - milled spruce wood fibers with an average elongation of 0.410 and an average geodesic length below 1 mm<br>PP - polypropylene<br>Coupling agent- maleic anhydride modified copo-polypropylene | | | | |

The fibers were analyzed using dynamic image analysis in accordance with International standard ISO 13322-2:2021 Particle size analysis - Image analysis methods, Part 2: Dynamic image analysis methods. The fibers were tested in the dry state and in the form as they were fed to the compounder. Clean compressed air was used as dispersing medium. The measurements of the fibers included the area A, the long linear dimension x_Fmax and the short linear dimension x_Fmin and were recorded for all imaged fibers. From this data set, the geodesic length ($x_{LG}$) and thickness ($x_E$) were determined and the elongation was calculated in accordance with the standard ISO 9276-6: 2008, Representation of results of particle size analysis, Part 6: Descriptive and quantitative representation of particle shape and morphology.

The materials were compounded using a co-rotating twin screw extruder with a diameter of 50 mm and a LID ratio of 36:1. Polypropylene polymer and the coupling agent were added in the main inlet and the fibers were dosed through a side feeder into the melted polymer. The temperature in the melt zones was 190°C and in the compounding zones the temperature was kept at 170°C, the rotational speed of the compounder was kept at 150 revolutions per minute (rpm). The material from the compounder was pelletized using an underwater pelletizer.

The ratio between polymer: fiber : coupling agent was selected to 58:40:2 as this led to a cellulosic composite with good mechanical properties, see Table 2.

The melt flow volume rate (MVR), which can be taken as a measurement of the processability of the cellulosic composite, was determined according to International standard ISO 1133-1:2022 Plastics - Determination of the melt mass-flow rate (MFR) and melt volume-flow rate (MVR) of thermoplastics, Part 1: Standard method with a temperature of 220°C and a load of 5 kg.

Table 2 - Mechanical properties cellulosic composite

| Cellulosic composite | Tensile strength (MPa) | Flexural strength (MPa) | Elongation at break | Flexural elongation (%) |
|---|---|---|---|---|
| Reference composite 1 | 43.6 | 59.9 | 3.9 | 5.6 |
| Composite 1 | 46.7 | 62.4 | 3.9 | 4.5 |
| Composite 2 | 45.5 | 63.1 | 3.1 | 3.9 |
| Reference composite 2 | 43.4 | 60.5 | 2.5 | 3.2 |

(continued)

| Cellulosic composite | Tensile strength (MPa) | Flexural strength (MPa) | Elongation at break | Flexural elongation (%) |
|---|---|---|---|---|
| Reference composite 3 | 40.9 | 58.1 | 1.9 | 2.8 |

| Cellulosic composite | Impact notched (kJ/m$^2$) | MVR (cm$^3$/10 min) | | |
|---|---|---|---|---|
| Reference composite 1 | 3.5 | 7.96 | | |
| Composite 1 | 3.3 | 8.69 | | |
| Composite 2 | 3.3 | 12.5 | | |
| Reference composite 2 | 2.8 | 22.3 | | |
| Reference composite 3 | 2.1 | 34.4 | | |

As is shown in Table 2, addition of rounded cellulose and/or lignocellulose fibers to the elongated cellulose and/or lignocellulose fibers increased the processability of the cellulosic composite as represented by an increase in MVR (compare Reference composite 1 with Composite 1, 2 and Reference composite 2, 3). However, if the mass fraction of the rounded cellulose and/or lignocellulose fibers was larger than the mass fraction of the elongated cellulose and/or lignocellulose fibers (Reference composite 2) in the composite, or if merely rounded cellulose and/or lignocellulose fibers were used (Reference composite 3), the mechanical properties of the cellulosic composite, such as tensile strength, flexural strength, elongation at break and flexural elongation, became worse. In fact, the highest tensile strength and flexural strength of the tested cellulosic composites were obtained by having a mixture of elongated and rounded cellulose and/or lignocellulose fibers but with a mass fraction of the elongated cellulose and/or lignocellulose fibers equal to (Composite 2) or higher (Composite 1) than the mass fraction of the rounded cellulose and/or lignocellulose fibers. Furthermore, the cellulosic composites of the invention (Composite 1, 2) did not show any significant deterioration in impact notched as compared to Reference composite 1 with only elongated cellulose and/or lignocellulose fibers. Increasing the mass fraction of the rounded cellulose and/or lignocellulose fibers beyond the mass fraction of the elongated cellulose and/or lignocellulose fibers caused a deterioration in impact notched, which parameter represents the resistance of the cellulosic composite to impact.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

**Claims**

1.   A cellulosic composite comprising:

a thermoplastic polymer matrix; and
from 5 up to 80 weight-% of cellulose and/or lignocellulose fibers comprising a mixture of elongated cellulose and/or lignocellulose fibers having an average elongation equal to or lower than 0.300 and rounded cellulose and/or lignocellulose fibers having an average elongation equal to or higher than 0.325, wherein
a mass fraction of the elongated cellulose and/or lignocellulose fibers in the mixture is equal to or larger than a mass fraction of the rounded cellulose and/or lignocellulose fibers in the mixture; and elongation of a cellulose and/or lignocellulose fiber is defined as $x_E / x_{LG}$, wherein $x_E$ represents average thickness of a cellulose and/or lignocellulose fiber and $x_{LG}$ represent geodesic length of the cellulose and/or lignocellulose fiber.

2.   The cellulosic composite of claim 1, wherein the elongated cellulose and/or lignocellulose fibers have an average elongation equal to or lower than 0.275, preferably selected within an interval from 0.100 up to 0.275, more preferably selected within an interval of from 0.150 up to 0.275, and most preferably selected within an interval of from 0.200 up to 0.275.

3. The cellulosic composite of claim 1 or 2, wherein the rounded cellulose and/or lignocellulose fibers have an average elongation equal to or higher than 0.350, preferably equal to or higher than 0.375, and more preferably equal to or higher than 0.410.

4. The cellulosic composite of any one of claims 1 to 3, wherein the cellulosic composite comprises from 10 up to 80 weight-% of the cellulose and/or lignocellulose fibers, preferably from 10 up to 70 weight% of the cellulose and/or lignocellulose fibers, more preferably from 20 up to 60 weight-% of the cellulose and/or lignocellulose fibers, and most preferably from 30 up to 50 weight-% of the cellulose and/or lignocellulose fibers.

5. The cellulosic composite of any one of claims 1 to 4, wherein a mass fraction of the elongated cellulose and/or lignocellulose fibers in the mixture is larger than a mass fraction of the rounded cellulose and/or lignocellulose fibers in the mixture;

   optionally a mass fraction of the elongated cellulose and/or lignocellulose fibers is selected within an interval of from 55 up to 95 % of the mixture, preferably within an interval of from 60 up to 90 % of the mixture, more preferably within an interval of from 70 up to 90 % of the mixture, and most preferably within an interval of from 75 up to 87.5 % of the mixture; and/or
   optionally a mass fraction of the rounded cellulose and/or lignocellulose fibers is selected within an interval of from 5 up to 45 % of the mixture, preferably within an interval of from 10 up to 40 % of the mixture, more preferably within an interval of from 10 up to 30 % of the mixture, and most preferably within an interval of from 12.5 up to 25 % of the mixture.

6. The cellulosic composite of any one of claims 1 to 5, wherein the cellulose and/or lignocellulose fibers are milled cellulose and/or lignocellulose fibers.

7. The cellulosic composite of any one of claims 1 to 6, wherein the cellulose and/or lignocellulose fibers are selected from the group consisting of chemical pulp fibers, thermomechanical pulp fibers and mechanical pulp fibers, preferably selected from the group consisting of sulfate pulp fibers, sulfite pulp fibers, dissolving pulp fibers, thermomechanical pulp (TMP) fibers, high temperature thermomechanical pulp (HTMP) fibers, mechanical fibers intended for medium density fiberboard (MDF-fibers), chemi-thermomechanical pulp (CTMP) fibers, high temperature chemi-thermomechanical pulp (HTCTMP) fibers, and a combination thereof.

8. The cellulosic composite of any one of claims 1 to 7, wherein an average geodesic length is below 1 mm, preferably equal to or below 750 $\mu$m.

9. The cellulosic composite of any one of claims 1 to 8, wherein the thermoplastic polymer matrix comprises at least one thermoplastic polymer, preferably selected from the group consisting of polyethylene (PE), polypropylene (PP), polyolefin copolymers, polystyrene (PS), polystyrene copolymers, polyacrylates, polymethacrylates, polyesters, polyvinylchloride (PVC), fluoropolymers, polyamides (PA), polyether imides, polyphenylene sulfides, polysulfones, polylactic acid (PLA), polyacetals, polycarbonates, polyphenylene oxides, polyurethanes, polyacrylates, polyhydroxyalkanoates (PHA), polybutyrate adipate terephthalate (PBAT), polybutylene succinate (PBS), polycaprolactones (PCL), polyglycolic acid (PGA), polyethylene terephthalate (PET), acrylonitrile butadiene styrene (ABS), polycarbonate (PC), poly(methyl methacrylate) (PMMA), polyoxymethylene (POM), poly(p-phenylene oxide) (PPO), a copolymer thereof and a mixture thereof, more preferably selected from the group consisting of polyethylene, polypropylene, a copolymer thereof and a mixture thereof, and most preferably polypropylene or a copolymer thereof.

10. The cellulosic composite of any one of claims 1 to 9, wherein

    the thermoplastic polymer matrix comprises at least one thermoplastic polymer; and
    the cellulosic composite comprises at least 20 weight-% and up to 95 weight-% of the at least one thermoplastic polymer, preferably at least 20 weight-% and up to 90 weight-% of the at least one thermoplastic polymer, more preferably at least 30 weight-% and up to 90 weight-% of the at least one thermoplastic polymer, and most preferably at least 40 weight-% and up to 80 weight-% of the at least one thermoplastic polymer, such as at least 50 weight-% and up to 70 weight-% of the at least one thermoplastic polymer.

11. The cellulosic composite of any one of claims 1 to 10, further comprising:

at least one coupling agent, preferably selected from the group consisting of maleic anhydride, such as maleic anhydride grafted polymers, a silane, a siloxane, and a mixture thereof, more preferably maleic anhydride, such as maleic anhydride grafted polymers, optionally wherein the cellulosic composite comprises at least 0.5 weight-% and up to 5 weight-% of the at least one coupling agent, preferably at least 1 weight-% and up to 5 weight-% of the at least one coupling agent, and more preferably at least 1.5 weight-% and up to 3 weight-% of the at least one coupling agent; and/or

at least one additive, preferably selected from the group consisting of a lubricant, a colorant, a pigment, a filler, an acid scavenger, an antioxidant, a light stabilizer, a blowing agent, a UV-stabilizer, a flame retardant, a heat stabilizer, an antistatic agent, and a foaming additive.

12. A composite granulate (20) made of a cellulosic composite of any one of claims 1 to 11.

13. A method of producing a composite article (30), the method comprising injection molding composite granulates (20) of claim 12 to produce the composite article (30).

14. A method of producing a cellulosic composite comprising cellulose and/or lignocellulose fibers and a thermoplastic polymer matrix, the method comprises melt processing a mixture comprising at least one thermoplastic polymer and from 5 up to 80 weight-% of cellulose and/or lignocellulose fibers comprising a mixture of elongated cellulose and/or lignocellulose fibers having an average elongation equal to or lower than 0.300 and rounded cellulose and/or lignocellulose fibers having an average elongation equal to or higher than 0.325, preferably by melting the at least one thermoplastic polymer, and adding the cellulose and/or lignocellulose fibers to the melted at least one thermoplastic polymer, wherein

a mass fraction of the elongated cellulose and/or lignocellulose fibers in the mixture is equal to or larger than a mass fraction of the rounded cellulose and/or lignocellulose fibers in the mixture; and
elongation of a cellulose and/or lignocellulose fiber is defined as $x_E / x_{LG}$, wherein $x_E$ represents average thickness of a cellulose and/or lignocellulose fiber and $x_{LG}$ represent geodesic length of the cellulose and/or lignocellulose fiber.

15. Use of rounded cellulose and/or lignocellulose fibers having an average elongation equal to or higher than 0.325 as an additive to a cellulosic composite comprising a thermoplastic polymer matrix and elongated cellulose and/or lignocellulose fibers having an average elongation equal to or lower than 0.300 to improve melt processability of the cellulosic composite, wherein

elongation of a cellulose and/or lignocellulose fiber is defined as $x_E / x_{LG}$, wherein $x_E$ represents average thickness of a cellulose and/or lignocellulose fiber and $x_{LG}$ represent geodesic length of the cellulose and/or lignocellulose fiber;
optionally the rounded cellulose and/or lignocellulose fibers are used as an additive to reduce at least one of injection molding pressure and thermal degradation of the cellulosic composite during injection molding.

Fig. 1

Fig. 2

Fig. 3

EP 4 471 079 A1

# EUROPEAN SEARCH REPORT

Application Number

EP 24 17 8492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOURMAUD ALAIN ET AL: "About the frontier between filling and reinforcement by fine flax particles in plant fibre composites", INDUSTRIAL CROPS AND PRODUCTS, ELSEVIER, NL, vol. 141, 24 September 2019 (2019-09-24), XP085890449, ISSN: 0926-6690, DOI: 10.1016/J.INDCROP.2019.111774 [retrieved on 2019-09-24] | 1-6,8-15 | INV. C08J5/04 |
| Y | * abstract * * "2.1 Materials"; page 2 * * "2.5 Compounding and processing"; page 3 * * "3.3.2 Rheological analysis",; page 7 * * "3.3.3 Effect of the polymer matrix type on biocomposite mechanical properties"; page 7 - page 8 * * tables 1, 2, 3 * * figures 6, 7, 8 * | 7,11 | |

- - - - -

-/--

TECHNICAL FIELDS
SEARCHED      (IPC)

C08J
C09J

The present search report has been drawn up for all claims

| Place of search | Date of completion of the search | Examiner |
|---|---|---|
| Munich | 15 October 2024 | Meiser, Wibke |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 17 8492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MAIJU HIETALA ET AL: "The effect of pre-softened wood chips on wood fibre aspect ratio and mechanical properties of woodpolymer composites", COMPOSITES PART A, ELSEVIER, AMSTERDAM, NL, vol. 42, no. 12, 17 September 2011 (2011-09-17), pages 2110-2116, XP028330951, ISSN: 1359-835X, DOI: 10.1016/J.COMPOSITESA.2011.09.021 [retrieved on 2011-09-23] * abstract * * "2.1. Materials", "2.2 Wood chip pre-treatment", "2.3. Compounding process"; page 2111 * * tables 1, 2 * * "4. Conclusions"; page 2116 * | 7 | |
| Y | HEIDI PELTOLA ET AL: "Wood based PLA and PP composites: Effect of fibre type and matrix polymer on fibre morphology, dispersion and composite properties", COMPOSITES PART A, vol. 61, 1 June 2014 (2014-06-01), pages 13-22, XP055383202, AMSTERDAM, NL ISSN: 1359-835X, DOI: 10.1016/j.compositesa.2014.02.002 * abstract * * "2.2. Biocomposite processing"; page 15 * * tables 2, 4, 9 * | 7 | **TECHNICAL FIELDS SEARCHED (IPC)** |

-/--

The present search report has been drawn up for all claims

| Place of search | Date of completion of the search | Examiner |
|---|---|---|
| Munich | 15 October 2024 | Meiser, Wibke |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 24 17 8492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLEDZKI A K ET AL: "High performance hybrid PP and PLA biocomposites reinforced with short man-made cellulose fibres and softwood flour", COMPOSITES PART A, ELSEVIER, AMSTERDAM, NL, vol. 74, 23 April 2015 (2015-04-23), pages 132-139, XP029607191, ISSN: 1359-835X, DOI: 10.1016/J.COMPOSITESA.2015.03.029 | 1-6,9-15 | |
| Y | * abstract * * "2.1 Materials"; page 133 * * "2.2.1. Compounding", "2.2.2. Injection moulding"; page 133 * * "3.1. Fibre diameter and fibre aspect ratio investigation"; page 134 * * figures 1-4 * | 7,11 | |

- - - - -

TECHNICAL FIELDS
SEARCHED      (IPC)

The present search report has been drawn up for all claims

| Place of search | Date of completion of the search | Examiner |
|---|---|---|
| Munich | 15 October 2024 | Meiser, Wibke |

EPO FORM 1503 03.82 (P04C01)

page 3 of 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022084059 A

**Non-patent literature cited in the description**

- **PONS et al.** Particle morphology: from visualization to measurement. *Powder Technology,* 1999, vol. 103, 44-57

- **SCHMID et al.** Characterizing Flock Fibres using Quantitative Image Analysis. *Flock,* 2004, vol. 30, 6-12